# EUROPÄISCHE PATENTANMELDUNG

(11) **EP 0 642 756 A1**
(43) Veröffentlichungstag der Anmeldung: **15.03.1995**
(21) Anmeldenummer: 94107315.7
(22) Anmeldetag: 10.05.1994
(51) Int. Cl.: A47J 43/25, B26B 5/00

(54) **Rohkostschneider zum Schneiden von Rohkost in Streifen**

(30) Priorität: 15.09.1993 DE 9313966 U
(71) Anmelder: Schlund, Manfred, CH-7247 Saas i.Pr. (CH)
(72) Erfinder: Schlund, Manfred, CH-7247 Saas i.Pr. (CH)
(74) Vertreter: Neidl-Stippler, Cornelia, Dr.

(57) **Zusammenfassung**

Die Erfindung betrifft einen Rohkostschneider zum Schneiden von Rohkost in Streifen mit einem Grundkörper (10), auf dem ansteigende Anlauframpen (13, 14) vorgesehen sind, der zwischen den Anlauframpen (13, 14) mehrere, parallel zueinander angeordnete Längsträger (26) mit dazwischen vorgesehenen Öffnungen aufweist, wobei zwischen den Anlauframpen (13, 14) mindestens eine im wesentlichen quer zur Schneiderichtung verlaufende doppelschneidige Messerreihe (11), die durch mäander- oder wellenartiges Formen aus einem Metallband wellenbergartige obere Querstege (18) und wellentalartige untere Querstege aufweist, angeordnet ist, die sich an einer mit dem Grundkörper (10) über Befestigungsmittel (24) fest verbundenen Halteplatte (22) abstützt, wobei die Halteplatte (22) mehrere Längsstege (23) aufweist, zwischen denen Abweiser (12) angebracht sind, die die Unterseite der wellenbergartigen oberen Querstege (18) der Messerreihe (11) stützen, während sich die Oberseiten der wellentalartigen unteren Querstege der Messerreihe (11) auf den Unterseiten der Längsträger (26) des Grundkörpers (10) abstützen, wobei die wellenbergartigen oberen Querstege (18) der Messerreihe (11) durch die länglichen Öffnungen des Grundkörpers (10) über dessen Anlauframpen (13, 14) hinausragen.

## Beschreibung

Die Erfindung betrifft einen Rohkostschneider für das Schneiden von Rohkost in Streifen.

Derartige Rohkostschneider sind bspw. aus der FR-A-323 456 bekannt.

Gattungsgemäße Rohkostschneider zum schneiden von Rohkost in Streifen, auch als Reib- oder Raffelvorrichtungen bezeichnet, sind auch schon in der DE-A-30 09 213 beschrieben. Auch die EP-A1-222 068 beschreibt eine derartige Reibe. Ebenfalls ist die DE-C-195 823 und die FR-A-634 732 derartigen Reiben gewidmet.

Ähnliche Schneidvorrichtungen bestehen bereits für Küchenmaschinen, wobei dann die Messer bspw. in einer drehbar auf einer Welle montierten Kunststoffscheibe eingebettet sind.

Solche Rohkostschneider finden Anwendung bei der Zubereitung von Gemüsepuffern, Rohkostsalaten und dergleichen und eignen sich besonders für die Verarbeitung von Gemüsearten mit relativ fester Konsistenz, wie Rüben, Sellerie, Kohlrabi, Kartoffeln etc. Sie können auch für die Verarbeitung von Materialien ähnlicher Konsistenz eingesetzt werden, wie Käse oder dgl.

Bei Verwendung der bekannten Reiben treten immer noch Probleme bei der Herstellung von Gemüsestreifen auf, da die Gemüse durch die im wesentlichen rechtwinkligen Messer zwar in Streifen geschnitten werden, aber eine große Verstopfungsgefahr der Reibe vorhanden ist, die bei längerer Verwendung zu Ausfällen und auch zu Reinigungs- und Hygieneproblemen führt. Bspw. ist bei der Ausführungsform, wie sie im EP-A1-222 068 beschrieben ist, die Verstopfungsgefahr und der Reibwiderstand zudem durch den im wesentlichen gleichen Querschnitt über seine gesamte Länge aufweisenden, durch Messer und Eindellung gebildeten rohrartig gekrümmten Ablauf mit einer anschlagartigen "Eindellung" als Ende des Einlaufkanals und zum Ablenken des Streifens gegeben, der die Streifen zunächst anstaucht, wodurch ein Brechen des Streifens erfolgen kann, und sodann die Streifen unter die Messerebene ablaufen läßt. Durch eine derartige Ausbildung ist ein leichtes, verletzungsfreies Schneiden stark erschwert und aufgrund der schwierig zu entfernenden Gemüsereste in den Messern entstehen Hygieneprobleme. Die Messer bei diesem Stand der Technik sind fast vollständig freiliegend, was den Angriff von Außenkräften, die ein Verbiegen aber auch eine sonstige Beeinträchtigung des Messers, bspw. durch Rostbildung, begünstigt.

Das Schneiden von weicheren Gemüsen, wie z.B. halbgar gekochten Kartoffeln, zum Beispiel zur Herstellung von Berner Rösti, ist auf der bekannten Reibe nicht in wünschenswertem Maße möglich.

In dem DE-GM-93 13 966.7 desselben Anmelders wird ein Rohkostschneider beschrieben, der auf einfache, schnelle Art und Weise gebrauchsgerechte Streifen schneidet, wobei eine hygienische Reinigung erleichtert ist. Der Aufbau des Rohkostschneiders ist folgender: Er weist einen Grundkörper mit zwei Anlauframpen auf, zwischen denen mindestens eine im wesentlichen quer zur Schneiderichtung verlaufende Messerreihe angeordnet ist. Die etwa U-förmigen Schneiden der Messerreihe stehen dabei über die Anlauframpen hinaus, wobei die Messerreihe wellenbergartige obere Querstege und wellentalartige untere Querstege aufweist. Die unteren Querstege der Messerreihe sind im Grundkörper befestigt. An diesem sitzen auch Abweiser für das geschnittene Gemüse.

Es entstehen jedoch Probleme bei der Herstellung des gattungsgemäßen Rohkostschneiders, da die Messerreihe in die Unterseite des Grundkörpers eingegossen werden muß.

Der Erfindung liegt die Aufgabe zugrunde, einen Rohkostschneider zu schaffen, der die Nachteile des Standes der Technik überwindet und gleichzeitig einfach und mit geringem Aufwand herzustellen ist.

Die Aufgabe wird erfindungsgemäß durch einen Rohkostschneider zum Schneiden von Rohkost in Streifen mit den Merkmalen des Anspruchs 1 gelöst. Der erfindungsgemäße Rohkostschneider umfaßt einen Grundkörper, auf dem ansteigende Anlauframpen vorgesehen sind, der zwischen den Anlauframpen mehrere, parallel zueinander angeordnete Längsträger mit dazwischen vorgesehenen Öffnungen aufweist, wobei zwischen den Anlauframpen mindestens eine im wesentlichen quer zur Schneiderichtung verlaufende doppelschneidige Messerreihe, die durch mäander- oder wellenartiges Formen aus einem Metallband wellenbergartige obere Querstege und wellentalartige untere Querstege aufweist, angeordnet ist, die sich an einer mit dem Grundkörper über Befestigungsmittel fest verbundenen Halteplatte abstützt, wobei die Halteplatte mehrere Längsstege aufweist, zwischen denen Abweiser angebracht sind, die die Unterseite der wellenbergartigen oberen Querstege der Messerreihe stützen, während sich die Oberseiten der wellentalartigen unteren Querstege der Messerreihe auf den Unterseiten der Längsträger des Grundkörpers abstützen, wobei die wellenbergartigen oberen Querstege der Messerreihe durch die länglichen Öffnungen des Grundkörpers über dessen Anlauframpen hinausragen.

Durch Verwendung einer Halteplatte, die die Messerreihe aufnimmt und stützt, entfällt bei dem erfindungsgemäßen Rohkostschneider ein aufwendiges Einlegen und Eingießen der Messerreihe in den Grundkörper. Dadurch kann das Herstellungsverfahren vereinfacht werden. Zusätzlich ergibt sich die Möglichkeit, den Rohkostschneider einfacher zu recyceln, da die metallenen Messer nicht in den aus Kunststoff bestehenden Grundkörper eingebettet sind und somit von diesem leicht getrennt werden können.

Vorteilhafte Weiterbildungen ergeben sich aus den Unteransprüchen.

Bevorzugt sind die Messer wellen- oder mäanderförmig, wobei die unteren wellentalartigen Querstege bevorzugt parallel zur Anlauframpe, bevorzugt innerhalb des Grundkörpers verlaufen, um ein besseres Fassen und Schneiden des Schneidgutes zu erreichen.

Durch die beidseitig der Messerreihen angeordneten schrägen Anlauframpen wird das mühelose Schneiden noch weiter gefördert, da das Gemüse mit Schwung über die Messerreihen geführt wird. Dadurch veringert sich die Kraft, die zum Führen des Gemüses über die Schneide notwendig ist, so daß insbesondere auch halbrohe oder gekochte Kartoffeln nicht durch zu große Haltekräfte bereits vor dem vollständigen Zerschneiden zerstört werden.

Es ist besonders günstig, wenn mehr als zwei Messerreihen in einer Vorrichtung vorgesehen sind. Dadurch wird bewirkt, daß in einer einzigen Bewegung mehrere Streifen geschnitten werden können und die Arbeitszeit stark verkürzt wird.

Die Form der Schneide ist bevorzugt so gewählt, daß möglichst wenig Raum zur Bildung von Verschmutzungen verbleibt, bspw in etwa halbkreisförmig oder auch rechteckig/quadratisch ausgebildet ist. Das hat zur Folge, daß die Gemüsestreifen eine entsprechend geformte Oberfläche erhalten.

Die Abweiser sind vorzugsweise mittig Auf der Oberseite der Längsstege angeordnet. Sie stützen die Unterseite des Messers und lassen gleichzeitig das Schneidgut ablaufen.

Der Grundkörper weist wie erwähnt mehrere parallel zueinander angeordnete Längsträger auf, die in Schneidrichtung ausgerichtet sind. Zwischen den Längsträgern sind zweckmäßig längliche Öffnungen angebracht, die ein Ablaufen des Schneidgutes ermöglichen. Wird die Halteplatte bei der Montage mit dem Grundkörper fest verbunden, sind die Messer zwischen den Längsträgern des Grundkörpers und den Längsstegen der Halteplatte so eingespannt, daß die oberen wellentalartigen Querstege des wellenförmigen Messers durch die länglichen Öffnungen im Grundkörper zwischen den Anlauframpen hinausragen und zur Unterseite des Grundkörpers hin offen sind. Die Unterseite der wellenartigen oberen Querstege des Messers werden durch die Abweiser gestützt, die wie erwähnt gleichzeitig für ein sanftes Ablaufen des Schnittgutes sorgen.

Die auf der Unterseite des Messers angeordneten Abweiser sind mit einem sanften Ablaufwinkelversehen, ihr Scheitelwinkel ist bevorzugt größer als 90 Grad, um das Schneidgut nicht über seine Bruchbelastungsgrenze hinaus zu belasten. Dadurch ergibt sich in vorteilhafter Weise, daß sich das Gemüse sanft entsprechend etwa dem Ablaufwinkel biegt, wodurch ein Brechen der Gemüsestreifen verhindert wird. Dieses würde bei einem Winkel von etwa 90 Grad auftreten, der einem festen Anschlag in der Gemüselaufbahn entspricht, da insbesondere gekochte festkochende Kartoffeln, wie sie für Rösti verwendet werden, aufgrund ihrer durch den Kochvorgang verminderten Elastizität leicht brechen. Je kürzer ein Kartoffelstift ist, um so schlechter eignet er sich für die typischen Berner Rösti, es wird eher ein gebratener Kartoffelbrei entstehen.

Die Anlauframpen können glatt oder aber auch mit Rillen ausgebildet sein, so daß das Gemüse auf den Rillen geführt wird und dadurch ein seitliches Wegrutschen, das stets mit einer Verletzungsgefahr verbunden ist, vermieden werden kann.

Die Handhabung des Rohkostschneiders wird weiterhin dadurch vereinfacht, daß in Schneidrichtung gesehen mindestens an einem Ende der Grundplatte ein Handgriff angebracht ist. Besonders vorteilhaft ist es, wenn die Querreihen der Messer jeweils aus einem geformten oder gebogenen Metallband bestehen. Dann können die Bandkanten vor dem Prägen des Bandes angeschliffen werden, so daß die nach dem Prägen entstandenen U-förmigen Schneiden besonders scharf sind und somit das Schneiden der Gemüsen wesentlich erleichtern.

Es ist aber auch möglich für die Messerreihe dünne Metallbänder zu verwenden, falls diese ausreichend durch den Kunststoffabweiser und die Längsstege der Halteplatte stabilisiert werden - diese dünnen Bänder sind an sich scharf und der aufwendige Vorgang des Schärfens kann entfallen oder zumindest wird das Messer nicht so schnell stumpf.

Nachfolgend werden Ausführungsbeispiele der Erfindung anhand von Zeichnungen näher erläutert.

Es zeigen in schematischer Darstellung:
- Fig.1: eine perspektivische Gesamtansicht eines ersten Ausführungsbeispiels des erfindungsgemäßen Rohkostschneiders;
- Fig. 2a: eine Draufsicht auf die Halteplatte des erfindungsgemäßen Rohkostschneiders;
- Fig. 2b: eine vergrößerte Schnittansicht des erfindungsgemäßen Rohkostschneiders in demontiertem Zustand; und
- Fig.3: eine vergrößerte Schnittansicht des erfindungsgemäßen Rohkostschneiders durch die Halteplatte mit zwei Messerreihen, rechtwinklig zur Schneidrichtung.

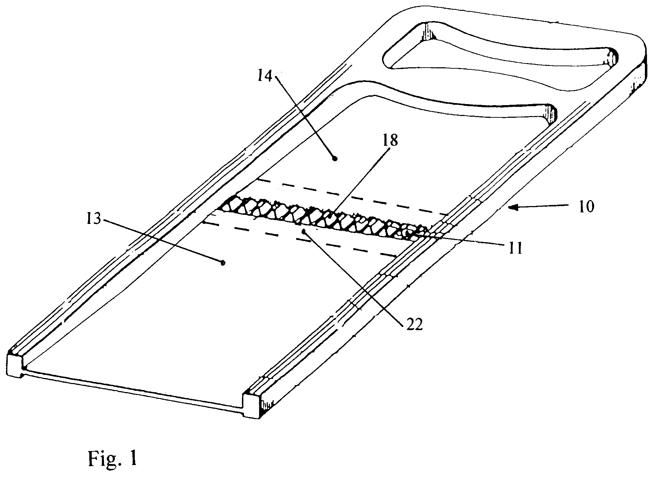

Fig.1 zeigt eine bevorzugte Ausführungsform des erfindungsgemäßen Rohkostschneiders. Er besitzt einen aus Kunststoff hergestellten Grundkörper 10, der auf seiner Oberseite zwei schräge Anlauframpen 13 und 14 aufweist, sowie ein querlaufendes, dazwischenliegendes, gewelltes Messer 11, das in einer am Grundkörper 10 befestigten Halteplatte 22 aufgenommen ist. Durch die schrägen Anlauframpen 13 und 14, auf deren gemeinsamem Maximum sich das gewellte Messer 11 befindet, ist ein leichtes und schwungvolles Zuführen des zu schneidenden Gemüses möglich, wobei durch die nach oben gerichtete Bewegung beim Schneiden die Verletzungsgefahr für den Betreiber vermindert wird.

Das Messer 11 kann auch mit weiteren Messern gleicher oder anderer Form, die ebenfalls in der Halteplatte 22 aufgenommen sind, zwischen den Anlauframpen 13 und 14 angeordnet (nicht gezeigt), kombiniert werden, wobei eine nächste, identische Messerreihe auch gegenüber den Messern 11 derart versetzt angeordnet sein kann, daß sich ein wellenbergartiger Quersteg 18 eines ersten Messers 11 seitlich versetzt hinter dem wellenbergartigen Quersteg 18 des zweiten Messers befindet.

Unterhalb der wellenbergartigen Querstege 18 des Messers 11 ist der Grundkörper 10 mit länglichen Öffnungen zum Abführen der Gemüsestreifen zur Unterseite des Rohkostschneiders versehen.

An den beiden Längsseiten des Grundkörpers 10 sind, wie aus Figur 1 ersichtlich, jeweils sich in Schneidrichtung erstreckende Führungsstege 8 angebracht, die an einem in Schneidrichtung gelegenen Ende des Rohkostschneiders in einem Handgriff enden können.

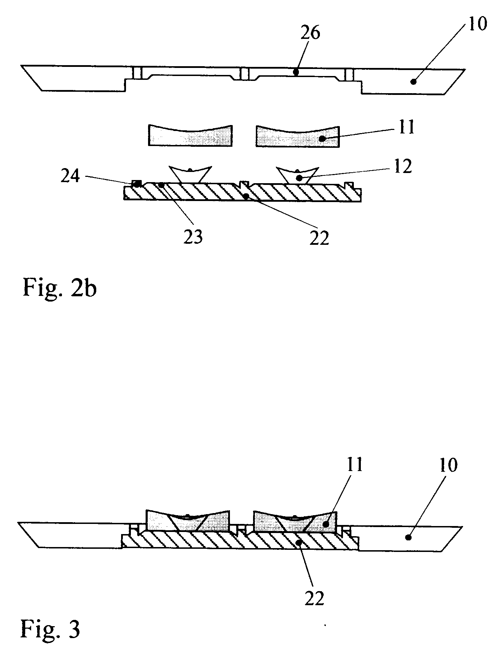

Wie besser aus Fig. 3 ersichtlich, ist die Freischneidwirkung der Messer 11 dadurch unterstützt, daß unterhalb der Messerreihe 11 Abweiser 12 vorgesehen sind, die durch die länglichen Öffnungen im Grundkörper 10 verlaufende Gemüseabschnitte sanft umlenken und ein Hängenbleiben oder Verstopfen des Schneidkanals vermeiden.

Die Schneidenfront des Messers 11 geht nach einer bestimmten Schneidendicke in den Abweiser 12 über. Der obere Teil der Schneide ist parallel zum Grundkörper 10 ausgerichtet. Das Messer 11 besteht bei dieser bevorzugten Ausführungsform aus einem Metallband. Die Bandkanten können jeweils in gleicher Weise vor dem Biegen des Bandes angeschliffen werden, so daß die nach dem Prägen entstandenen U-Schneiden besonders scharf sind und das Schneiden des Gemüses wesentlich erleichtern. Auf der Messerunterseite verläuft mittig eine Reihe von in Schneidrichtung - bevorzugt bis zum Messerende - konkav gekrümmten Abweisern 12, die hier aus Kunststoff hergestellt sind. Wie Fig.1 zeigt, sind die Messerschneiden 11 quer zur Schneidrichtung rechtwinklig ausgebildet. Bei dem beschriebenen Ausführungsbeispiel beträgt die Schneidenbreite ca. 5 - 8 mm.

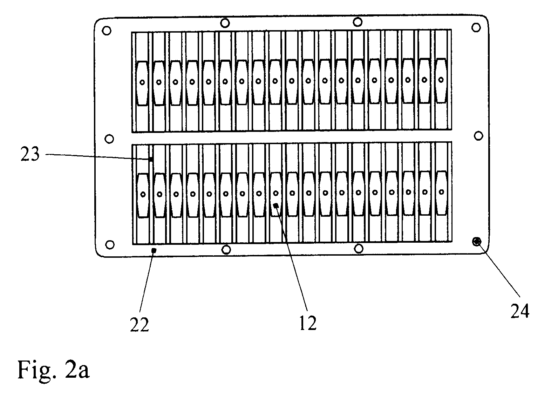

In Fig. 2a ist eine Draufsicht auf die Halteplatte 22 dargestellt. Die Halteplatte 22 besitzt mehrere Längsstege 23, wobei die Abweiser 12 mittig auf der Oberseite der Längsstege 23 zwischen diesen angeordnet sind. Am Umfang der Halteplatte 22 angeordnete Befestigungselemente 24 ermöglichen ein formschlüssiges Verbinden mit dem Grundkörper 10.

Fig. 2b zeigt eine geschnittene Ansicht der Halteplatte 22, des Messers 11 und des Grundkörpers 10 in demontiertem Zustand. Die Abweiser 12 besitzen im wesentlichen die Form eines Pfeiles, dessen geschwungene Seitenlinien in die Unterseite des oberen Quersteges 18 des Messers 11 übergehen. Gleichzeitig ermöglichen bei dem gezeigten Ausführungsbeispiel an der Oberseite der Abweiser 12 angebrachte Zapfen 25 ein einfaches formschlüssiges Verbinden des Messers 11 mit den Abweisern 12.

Der Grundkörper 10 weist mehrere parallel zueinander angeordnete Längsträger 26 auf, die die Oberseite der unteren Querstege 20 des Messers 11 stützen. Zwischen den Längsträgern sind wie erwähnt längliche Öffnungen angebracht, die ein Ablaufen des Schneidgutes ermöglichen.

In Fig. 3 ist eine Schnittansicht des erfindungsgemäßen Rohkostschneiders durch die Halteplatte 22 und das Messer 11 in zusammengebautem Zustand abgebildet. Es ist gut zu erkennen, daß das Messer 11 mit den Unterseiten der oberen Querstege 18 in der Halteplatte 22 befestigt ist, während die Oberseiten der unteren Querstege 20 an den Längsträgern 26 des Grundkörpers 10 anliegen. Die Messerreihe 11 ist zwischen der Halteplatte 22 und dem Grundkörper 10 so eingespannt, daß die oberen Querstege 18 des Messers 11 durch die länglichen Öffnungen 27 des Grundkörpers 10 zwischen den Anlauframpen 13 und 14 hervorragen.

Im folgenden wird die Wirkungsweise der Rohkostschneider näher erläutert. Der Gemüseschneider eignet sich in gleicher Weise für rohe wie halbrohe, teilweise sogar gargekochte Gemüsearten, wie Möhren oder Kartoffeln. Das zu schneidende Gemüse wird beispielsweise in einen nicht dargestellten an sich bekannten Halter eingesetzt und mit diesem auf die Anlauframpe 13 oder 14 aufgesetzt. Das Gemüse wird dann in Schneidrichtung über das Messer 11 hinweggeführt, wobei auf der Unterseite z.B. der Kartoffel Streifen abgeschnitten werden. Je nachdem, ob das Gemüse roh, halbroh oder gekocht ist, wird sich dabei der Streifen spanförmig gekrümmt ausbilden (vgl. Fig.3). Das Gemüsestück wird nun von der Anlauframpe 14 mit mehr oder weniger Schwung gegen das Messer 11 geführt, wobei Streifen aus dem Gemüse herausgeschnitten werden. Dieser Vorgang wird bis zum endgültigen Zerkleinern des Gemüsestücks wiederholt. Schienenartige, bevorzugt U-förmige Führungsschienen können zur Auflage und auch Führung des nicht dargestellten Halters dienen, die bevorzugt geringfügig höher als die maximale Höhe der Schneiden des Messers 11 ausgebildet sind. Obwohl sich die Rohkostschneider und insbesondere die Messer 11 aus Metall, Blech oder dergleichen herstellen lassen, können sie auch einstückig aus einem Kunststoff im Spritzgußverfahren hergestellt sein. Mit der Rohkostschneider lassen sich außer Gemüsen auch Salate, z.B. zu Rohkostsalate, verarbeiten. Die Messerschneiden können z.B. auch Trapezform aufweisen.

Sebstverständlich kann der erfindungsgemäße Rohkostschneider auch noch mit zusätzlichen Messer- und Raffeleinrichtungen ausgestattet sein, die einen noch vielfältigeren Einsatz des Rohkostschneiders ermöglichen.

Entgegen der Darstellung in den Ausführungsbeispielen können die Messer 11 auch leicht schräg zur Schneidrichtung angeordnet werden, wie bspw. für Gurkenhobel bekannt, wobei aber auch dann die Schneiden parallel zur Schneidrichtung liegen.

Durch die separate Herstellung des Grundkörpers 10, der Halteplatte 22, die beide aus Kunststoff gefertigt sein können, und des metallenen Messers 11 ist eine umweltverträgliche Entsorgung des Rohkostschneiders am Ende seiner Lebensdauer sehr einfach möglich, indem die Halteplatte 22 wieder vom Grundkörper 10 gelöst werden kann. Ein umweltschädliches Einschmelzen des Kunststoffes zum Trennen der einzelnen Materialien ist nicht mehr erforderlich.

## Patentansprüche

1. Rohkostschneider zum Schneiden von Rohkost in Streifen mit einem Grundkörper (10), auf dem ansteigende Anlauframpen (13, 14) vorgesehen sind, der zwischen den Anlauframpen (13, 14) mehrere, parallel zueinander angeordnete Längsträger (26) mit dazwischen vorgesehenen Öffnungen aufweist, wobei zwischen den Anlauframpen (13, 14) mindestens eine im wesentlichen quer zur Schneiderichtung verlaufende doppelschneidige Messerreihe (11), die durch mäander- oder wellenartiges Formen aus einem Metallband wellenbergartige obere Querstege (18) und wellentalartige untere Querstege aufweist, angeordnet ist, die sich an einer mit dem Grundkörper (10) über Befestigungsmittel (24) fest verbundenen Halteplatte (22) abstützt, wobei die Halteplatte (22) mehrere Längsstege (23) aufweist, zwischen denen Abweiser (12) angebracht sind, die die Unterseite der wellenbergartigen oberen Querstege (18) der Messerreihe (11) stützen, während sich die Oberseiten der wellentalartigen unteren Querstege der Messerreihe (11) auf den Unterseiten der Längsträger (26) des Grundkörpers (10) abstützen, wobei die wellenbergartigen oberen Querstege (18) der Messerreihe (11) durch die länglichen Öffnungen des Grundkörpers (10) über dessen Anlauframpen (13, 14) hinausragen.

2. Rohkostschneider nach Anspruch 1, dadurch gekennzeichnet, daß die Abweiser (12) im Querschnitt im wesentlichen die Form eines Pfeils besitzen, wobei die geschwungenen Seitenflächen seiner Spitze in die Unterseite des oberen Quersteges (18) der Messerreihe (11) übergehen.

3. Rohkostschneider nach Anspruch 1 oder 2, dadurch gekennzeichnet, daß die Oberseite der Abweiser (12) Zapfen (25) für das Aufsetzen der Messerreihe (11) aufweist.

4. Rohkostschneider nach mindestens einem der Ansprüche 1 bis 3, dadurch gekennzeichnet, daß der Abweiser (12) zur Verbindung mit der Unterseite der wellenbergartigen oberen Querstege (18) der Messerreihe (11) durch an sich bekannte Maßnahmen zur Verbindung von Kunststoff mit Metall, wie Öffnungen im Metall, durch die der Kunststoff durchtreten kann oder auch durch Vorsprünge im Metall, die einen Formschluß zwischen Metall und Kunststoff ermöglichen, ausgebildet ist.

5. Rohkostschneider nach mindestens einem der Ansprüche 1 bis 4, dadurch gekennzeichnet, daß der Rohkostschneider weitere Messer- oder Raffeleinrichtungen aufweist, die parallel oder unter einem Winkel zum Messer (11) verlaufen.

6. Rohkostschneider nach mindestens einem der Ansprüche 1 bis 5, dadurch gekennzeichnet, daß der Grundkörper (10) und die Halteplatte (22) aus Kunststoff ausgebildet sind.

7. Rohkostschneider nach einem der Ansprüche 1 bis 6, dadurch gekennzeichnet, daß die Verbindung von Grundkörper (10) und Halteplatte (22) lösbar ist.

8. Rohkostschneider nach einem der Ansprüche 1 bis 7, dadurch gekennzeichnet, daß die Abweiser (12) einstückig mit der Halteplatte (22) ausgebildet sind.

9. Rohkostschneider nach einem der Ansprüche 1 bis 8, dadurch gekennzeichnet, daß im Grundkörper (10) mindestens eine Ausnehmung für die Aufnahme der Halteplatte (22) vorgesehen ist.

10. Rohkostschneider nach einem der Ansprüche 1 bis 9, dadurch gekennzeichnet, daß die Halteplatte (22) Montagestifte (24) und der Grundkörper (10) Öffnungen oder Löcher zur Aufnahme der Montagestifte (24) aufweist.
